# EUROPÄISCHE PATENTANMELDUNG

(11) **EP 2 251 752 A2**
(43) Veröffentlichungstag der Anmeldung: **17.11.2010**
(21) Anmeldenummer: 10004343.9
(22) Anmeldetag: 23.04.2010
(51) Int. Cl.: G05B 19/042

(54) **Anordnung zur Kommunikation mit Systemkomponenten der Prozesstechnik, insbesondere mit Prozessventilen**

(30) Priorität: 07.05.2009 DE 102009020288
(71) Anmelder: GEA Tuchenhagen GmbH, 21514 Büchen (DE)
(72) Erfinder: Porath, Bernd, 23881 Breitenfelde (DE); Scherer, Bettina, 97959 Assamstadt (DE)

(57) **Zusammenfassung**

Die Erfindung betrifft eine Anordnung zur Kommunikation (K; K1, K2) mit Systemkomponenten (10) der Prozesstechnik, wobei die Kommunikation (K) mit einer von der wenigstens einen fernsteuerbaren Systemkomponente (10) im Abstand angeordneten zentralen Steuerungs- und/oder Überwachungseinrichtung (20) erfolgt und wenigstens eine der Systemkomponente (10) zugeordnete und in deren unmittelbarem Bereich angeordnete kommunizierbare lokalen Steuerungs- und/oder Überwachungseinrichtung (3.1) vorgesehen ist. Es ist Aufgabe der vorliegenden Erfindung, die Wireless-Technologie in der Prozesstechnik nicht nur für die Kommunikation zwischen der Systemkomponente und einer zentralen Überwachungseinrichtung zu nutzen, sondern die Wireless-Technologie auch weitergehend, d.h. umfassend zur Anwendung zu bringen. Dies wird dadurch erreicht, dass die Kommunikation (K; K1, K2) zwischen der zentralen Steuerungs- und/oder Überwachungseinrichtung (20) und der lokalen Steuerungs- und/oder Überwachungseinrichtung (3.1) draht- und lückenlos erfolgt (Figur 1).

## Beschreibung

### TECHNISCHES GEBIET

Die Erfindung betrifft eine Anordnung zur Kommunikation mit Systemkomponenten der Prozesstechnik, insbesondere mit Prozessventilen, wobei die Kommunikation mit einer von der wenigstens einen fernsteuerbaren Systemkomponente im Abstand angeordneten zentralen Steuerungs- und/oder Überwachungseinrichtung erfolgt, wobei die Kommunikation wenigstens einen Signalaustausch zur Steuerung und/oder einen Signalaustausch zur Überwachung beinhaltet, mit wenigstens einer der Systemkomponente zugeordneten und in deren unmittelbarem Bereich angeordneten kommunizierbaren lokalen Steuerungs- und/oder Überwachungseinrichtung, mit wenigstens einem der Systemkomponente zugeordneten, in deren unmittelbarem Bereich angeordneten und diese betätigenden Aktor und/oder einem der Systemkomponente zugeordneten, in deren unmittelbarem Bereich angeordneten und diese überwachenden Sensor, wobei Aktor und/oder Sensor mit der lokalen Steuerungs- und/oder Überwachungseinrichtung im festverdrahteten Signalaustausch stehen bzw. steht.

Unter Kommunikation soll im weitesten Sinne die Steuerung oder die Überwachung dieser Systemkomponenten, auch vielfach als Feldgeräte bezeichnet, oder es sollen darunter auch beide Maßnahmen verstanden werden.

Bei den Systemkomponenten handelt es sich insbesondere um fernsteuerbare Prozessventile, deren Antrieb in der Regel als Kolbenantrieb mit Federrückstellung ausgebildet ist, dessen Antriebskolben bevorzugt mit einem Druckmittel, vorzugsweise einem pneumatischen Druckmittel, beaufschlagt wird. Andere Systemkomponenten der Prozesstechnik, wie Pumpen, Gebläse, maschinelle Rührvorrichtungen, maschinelle Reinigungsvorrichtungen, und weitere hier nicht genannte werden jedoch gleichrangig in Betracht gezogen.

### STAND DER TECHNIK

Der herkömmliche Stand Technik mit einer diskreten Verdrahtung der Systemkomponenten ist hinsichtlich der in Rede stehenden Kommunikation am Beispiel der Prozessventile in der Firmendruckschrift **GEA Tuchenhagen, Komponenten für die Flüssigkeitsverarbeitung, 600d-03 (2003)** oder der Firmendruckschrift **GEA Tuchenhagen, VARIVENT^{®} Ventile, Die Schlüsselkomponente für festverrohrte Prozessanlagen, 610d-05/08 (05/2008)** beschrieben. Eine ältere Firmendruckschrift **TUCHENHAGEN, OT-VARIVENT^{®}, das Edelstahl-Ventilprogramm für heute und morgen**, aus der Zeit vor Juli 1993 offenbart gleichfalls einen diesbezüglichen Stand der Technik. Hierbei sind die Signalübertragungsleitungen für Steuerung (Ansteuerung der Pilotventile zur Steuerung und Verteilung des Druckmittels) und/oder Rückmeldungen der Ventilstellung(en) (Überwachung) zwischen dem einzelnen Prozessventil und einer zentralen Steuerungs- und/oder Überwachungseinrichtung diskret ausgeführt. Darüber hinaus sind an jedes Prozessventil Leitungen zur Spannungsversorgung für eine lokale Steuerungs-und/oder Überwachungseinrichtung vor Ort mit ihrer Steuerungs- und Überwachungselektronik herangeführt. Ein derartiges Ventil-Informations-System im weitesten Sinne ist in der Firmendruckschrift **GEA Tuchenhagen, T.VIS^{®} Rückmeldesysteme, Tuchenhagen Ventil-Informations-System, 638d-01/06, (06/2006)** beschrieben.

Die vorg. diskreten Verbindungsstrukturen zwischen dem jeweiligen Prozessventil einerseits und einer zentralen Steuerungs- und/oder Überwachungseinrichtung andererseits in Form aufwendiger Einzelverdrahtungen finden eine Vereinfachung in einem sog. ASI-Bus System, das in einem ungeschirmten 2-Leiter-Flachkabel Aktoren und Sensoren auf der untersten Feldebene schnell, einfach und kostengünstig verbindet. Ein derartiger ASI-Bus ist beispielsweise in der Firmendruckschrift **GEA Tuchenhagen, VARIVENT^{®}-AS Interface, OTAS^{®} vernetzte Ventile mit genormtem ASI-Bus, 009/0d-96 (1996)**, beschrieben. Kennzeichen derartiger Verdrahtungssysteme ist u.a. die unkomplizierte Verkabelung. Das ASI-Netz kann in beliebigen Strukturen aufgebaut werden. Verzweigungen werden dort eingebaut, so sie erforderlich sind. Daraus ergeben sich erhebliche Vorteile bei der Planung, Installation und Wartung gegenüber Netzen, die als Ring- oder Linienstruktur aufgebaut werden müssen. ASI ist ein weitverbreitetes, busähnliches Verdrahtungssystem, in das Aktoren und Sensoren unterschiedlicher Hersteller eingebunden werden.

Darüber hinaus sind in der Prozesstechnik drahtlos arbeitende Kommunikationssysteme bekannt, die nach der sog. Wireless-Technologie arbeiten und auf einem herstellerübergreifenden Standard basieren (sog. WirelessHart (Europa-Standard) und ISA SP100 (noch nicht vollständig realisierter USA-Standard)). Neben diesen standardisierten Protokollen stehen den Systementwicklern und Anwendern eine Vielzahl von proprietären Protokollen für die Funkkommunikation zur Verfügung. Dabei wird erst die Zukunft zeigen, welches System sich durchsetzt, um eine lückenlose Signalführung zwischen Feldgerät und Prozesssteuerung zu realisieren.

Die auf dem Markt befindlichen Produkte, die mit der Wireless-Technologie arbeiten, betreffen zum Einen reine Überwachungsaufgaben, wie beispielsweise die Überwachung des Füllstandes eines entfernt von einer zentralen Steuerung befindlichen Prozesstanks.

Zum Anderen beruhen bisherige Wireless-Technologien auf Fernbedienungen von Aktoren, die separat mit Spannung versorgt werden. Hier wären beispielhaft die Fernbedienung eines Fernsehers, der immer an der Netzspannung liegt, oder die Fernbedienung eines Garagentores, dessen Antrieb, der Aktor, immer an der Netzspannung betrieben wird, zu nennen.

Es ist Aufgabe der vorliegenden Erfindung, die Wireless-Technologie in der Prozesstechnik, insbesondere in der Nahrungsmittel- und Getränkeindustrie, der pharmazeutischen und kosmetischen Industrie, der Biotechnologie, nicht nur für die Kommunikation zwischen der Systemkomponente und einer zentralen Überwachungseinrichtung zu nutzen, sondern die Wireless-Technologie auch weitergehend, d.h. umfassend zur Anwendung zu bringen.

### ZUSAMMENFASSUNG DER ERFINDUNG

Diese Aufgabe wird durch eine Anordnung mit den Merkmalen des Anspruchs 1 gelöst. Vorteilhafte Ausgestaltungen der Erfindung sind Gegenstand der Unteransprüche.

Der erfinderische Grundgedanke besteht darin, die Wireless-Technologie auch für die lückenlose Steuerung der Systemkomponenten bzw. der Feldgeräte von der zentralen Steuerungs- und/oder Überwachungseinrichtung aus einzusetzen. In an sich bekannter Weise ist der jeweiligen Systemkomponente wenigstens ein Aktor zugeordnet, der in deren unmittelbarem Bereich angeordnet ist und diese betätigt. Zusätzlich oder alternativ ist in an sich bekannter Weise der jeweiligen Systemkomponente wenigstens ein Sensor zugeordnet, der in deren unmittelbarem Bereich angeordnet ist und diese überwacht. Dies bedeutet, dass die Wireless-Kommunikation zwischen der zentralen Steuerungs- und/oder Überwachungseinrichtung und der lokalen Steuerungs- und/oder Überwachungseinrichtung erfolgt. Letztere steht wiederum in an sich bekannter Weise im festverdrahteten Signalaustausch mit dem wenigstens einen Aktor und/oder dem wenigstens einen Sensor

Die Erfindung schlägt weiterhin vor, dass die gesamte drahtlose Kommunikation mit der jeweiligen lokalen Steuerungs- und Überwachungseinrichtung auf der Basis des Standards WirelessHart oder ISA SP100 oder eines proprietären Systems erfolgt. Die vorgeschlagene Lösung ist jedoch nicht an die derzeit verfügbaren Standards oder proprietären Systeme gebunden.

Eine vorteilhafte Ausführungsform der Anordnung sieht vor, dass der wenigstens eine Aktor und/oder der wenigstens eine Sensor über die wenigstens eine lokale Steuerungs- und/oder Überwachungseinrichtung mit Energie- oder Spannung versorgt werden bzw. wird.

Hinsichtlich der Energie- bzw. Spannungsversorgung der Steuerungs- und Überwachungseinrichtung, wobei es sich hier in der Regel um eine Steuerungs- und Überwachungselektronik handelt, werden erfindungsgemäß zwei Ausführungsvarianten vorgeschlagen. Bei der ersten Ausführungsvariante ist die wenigstens eine lokale Steuerungs- und/oder Überwachungseinrichtung an eine im unmittelbaren Bereich der Systemkomponente integrierte, autarke Energie- oder Spannungsversorgung angeschlossen, so dass die Systemkomponente vollständig drahtlos in der Prozessanlage betrieben wird. Dabei handelt es sich bei den autarken Energie- oder Spannungsversorgungssystemen um Hochleistungs-Batterien, Hochleistungs-Akkus, Brennstoffzellen oder integrierte Generatoren. Die Standzeiten dieser Systeme betragen 5 bis 10 Jahre, wenn die Steuer- und/oder Überwachungselektronik als sog. "Low-Power System" ausgestaltet ist.

Bei der zweiten Ausführungsvariante ist die wenigstens eine lokale Steuerungs-und/oder Überwachungseinrichtung an eine im Abstand von der Systemkomponente angeordnete, externe Energie- oder Spannungsversorgung angeschlossen, die in den meisten Fällen am Ort der Systemkomponente verfügbar ist, so dass diesbezüglich keine diskrete Verdrahtung von der zentralen Steuerungs- und/oder Überwachungseinrichtung aus erforderlich ist. Eine Energie- oder Spannungsversorgung von letzterer aus kann jedoch auch Teil der Lösung sein.

Die erfindungsgemäße Anordnung ist in besonderer Weise zur Kommunikation mit einer als fernsteuerbares Prozessventil ausgebildeten Systemkomponente geeignet und eine diesbezügliche Anwendung wird erfindungsgemäß vorgeschlagen, da derartige Prozessventile in sehr großer Anzahl in weitverzweigten Prozessanlagen, insbesondere solchen der Nahrungsmittel- und Getränkeindustrie oder der pharmazeutischen Industrie, angeordnet sind und in der vorstehend beschriebenen Weise gesteuert und überwacht werden müssen.

Das Prozessventil kann dabei als Absperr- oder als Mehrwegeventil mit der Arbeitsweise eines Hubventils und mit oder ohne Leckagesicherung ausgestaltet sein. Dieses Hubventil besitzt dabei wenigstens einen Verschlussteil, bei dem wenigstens eine Komponente seiner Öffnungs- und Schließbewegung senkrecht zu einer Sitzfläche gerichtet ist. Es kann aber auch als Schieberventil, d.h. als Absperrvorrichtung mit wenigstens einem Verschlussteil ausgeführt sein, das beim Öffnen und Schließen an einer zylindrischen Sitzfläche entlang gleitet. Absperrvorrichtungen der in Rede stehenden Art, die zwei relativ zueinander bewegliche Verschlussteile bzw. Schließglieder aufweisen, die zwischen sich einen sog. Leckagehohlraum einschließen, der über wenigstens einen Verbindungsweg mit der Umgebung des Ventils verbunden ist, werden auch als sog. leckagegesicherte Doppelsitzventile bezeichnet.

Bei den Hubventilen wirkt eine Verschlussteildichtung, die in dem als ein Sitzteller ausgebildeten Verschlussteil angeordnet ist, axial oder axial/radial mit der zugeordneten Sitzfläche zusammen (Dichtung im sog. Druckeingriff), während bei den Schieberventilen eine Verschlussteildichtung, die in dem als ein Schieberkolben ausgebildeten Verschlussteil angeordnet ist, radial mit der zylindrischen Sitzfläche zusammenwirkt (Dichtung im sog. Gleiteingriff).

Die Rückstellbewegung eines druckmittelbeaufschlagten Antriebskolbens innerhalb eines Antriebs des Prozessventils aus einer Arbeits- in eine Ruhestellung oder umgekehrt erfolgt in der Regel durch wenigstens eine Feder, vorzugsweise eine Schraubenfeder. Ein derartiger federbeaufschlagter Kolbenantrieb arbeitet, bezogen auf das Verschlussteil und die zugeordnete Sitzfläche, demnach federschließend oder federöffnend. Darüber hinaus sind auch beidseitig mit Druckmittel beaufschlagte, sog. doppeltwirkende Antriebskolben im Einsatz.

Die bekannten fernsteuerbaren Prozessventile der vorg. Art verfügen in der Regel über einen oberhalb des Antriebs angeordneten Anschluss- oder Steuerkopf, in den die Ventilstange des Schließgliedes oder die jeweilige Ventilstange der Schließglieder hineingeführt ist bzw. sind, wenn eine Rückmeldung der Verschiebelage der Ventilstange(n) und damit der Stellung des Prozessventils an eine zentrale, im Regelfall in einem mehr oder weniger großen Abstand vom Prozessventil angeordnete Steuerungs- und/oder Überwachungseinrichtung erwünscht oder erforderlich ist. Der vorg. Anschlusskopf nimmt optional auch die zur Steuerung des Druckmittels notwendigen, vorzugsweise elektromagnetisch betätigten Pilotventile auf, die gleichfalls in der Regel von der vorg. zentralen Steuerungs-und/oder Überwachungseinrichtung angesteuert werden. Die Steuerung des Druckmittels kann aber auch außerhalb des Anschlusskopfes erfolgen, so dass dieser das angesteuerte Druckmittel entweder lediglich nur durchleitet oder in die Handhabung des Druckmittels im Umfeld des Prozessventils gar nicht eingebunden ist.

Im Rahmend er vorliegenden Erfindung kommt bevorzugt ein solches Prozessventil zur Anwendung, dessen Aktor, der Antrieb, dadurch sehr einfach und robust ausgestaltet ist, dass gemäß einer vorteilhaften Ausführungsform dieser einen druckmittelbeaufschlagten, mit einer Federrückstellung versehenen Antriebskolben besitzt. Eine sehr einfache Handhabung des Aktors wird sichergestellt, wenn dieser, wie dies weiterhin vorgesehen ist, wenigstens ein elektromagnetisch betätigtes Pilotventil zur Steuerung eines Druckmittels, vorzugsweise eines pneumatischen Druckmittels, aufweist.

Eine sehr einfache Rückmeldung des Schaltzustandes des Prozessventils stellt eine Ausführungsform sicher, bei der das Prozessventil wenigstens einen Sensor zur Detektierung einer diskreten, vorbestimmten Ventilstellung des Prozessventils aufweist.

Eine lückenlose Überwachung des Schaltzustandes des Prozessventils wird über eine andere Ausführungsform des Prozessventils erreicht, bei der dieses wenigstens einen Sensor in Form eines Wegmesssystems zur Detektierung beliebiger Ventilstellungen zwischen einer Schließ- und einer Offenstellung des Prozessventils aufweist.

Die erfindungsgemäße Anordnung ist uneingeschränkt zur Kommunikation auch mit einer als Pumpe, Gebläse, maschinelle Rühr- oder maschinelle Reinigungsvorrichtung ausgebildeten Systemkomponente geeignet, da derartige Systemkomponenten gleichfalls in sehr großer Anzahl in den weitverzweigten Prozessanlagen, insbesondere solchen der Nahrungsmittel- und Getränkeindustrie oder der pharmazeutischen Industrie, angeordnet sind und in der vorstehend beschriebenen Weise gesteuert und überwacht werden müssen.

Die vorbeschriebene Wireless-Technologie weist zusammenfassend folgende Vorteile und Merkmale auf:
- Das Frequenzband steht lizenzfrei zur Verfügung.
- Die Prozessumgebung stellt kein unüberwindbares Hindernis dar.
- Die Reichweiten der Funksysteme sind unproblematisch.
- Die Integration verschiedener Hersteller von Kommunikations- und Systemkomponenten in einem System ist möglich.
- Durch Low-Power Systeme im Rahmen der Überwachungs- und Steuerungselektronik sind Standzeiten der integrierten, autarken Energie- oder Spannungsversorgungssysteme von 5 bis 10 Jahren möglich.
- Eine verschlüsselte Daten- und Signalübertragung ist möglich.
- Es besteht ein großes Einsparungspotenzial, da keine Kabelverlegung erforderlich ist.

### KURZBESCHREIBUNG DER ZEICHNUNGEN

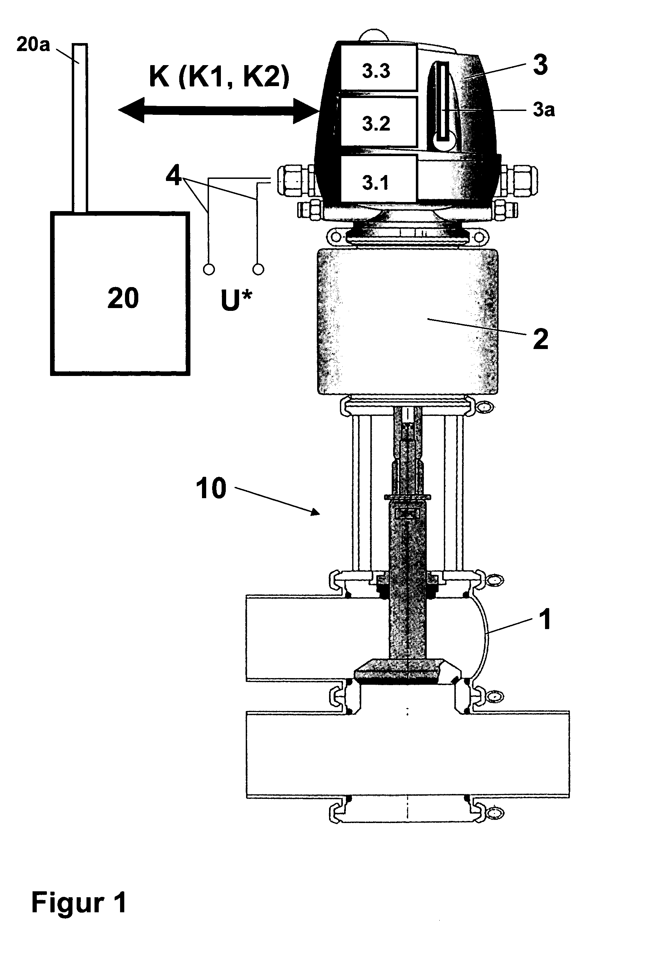

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, werden in den Figuren der Zeichnung zwei Ausführungsvarianten eines bevorzugten Ausführungsbeispiels der vorgeschlagenen Anordnung dargestellt und nachfolgend nach Aufbau und Funktion beschrieben Es zeigen
- **Figur 1**: in schematischer Darstellung eine erste Ausführungsform einer Anordnung gemäß der Erfindung zur drahtlosen Kommunikation zwischen einer lokalen Steuerungs- und/oder Überwachungsein- richtung einer Systemkomponente in der Ausgestaltung eines Prozessventils und einer zentralen Steuerungs- und/oder Überwa- chungseinrichtung, wobei die lokale Steuerungs- und/oder Über- wachungseinrichtung mit einer am oder im Prozessventil integrier- ten, autarken Energie- oder Spannungsversorgung (Spannungs- quelle) verbunden ist und

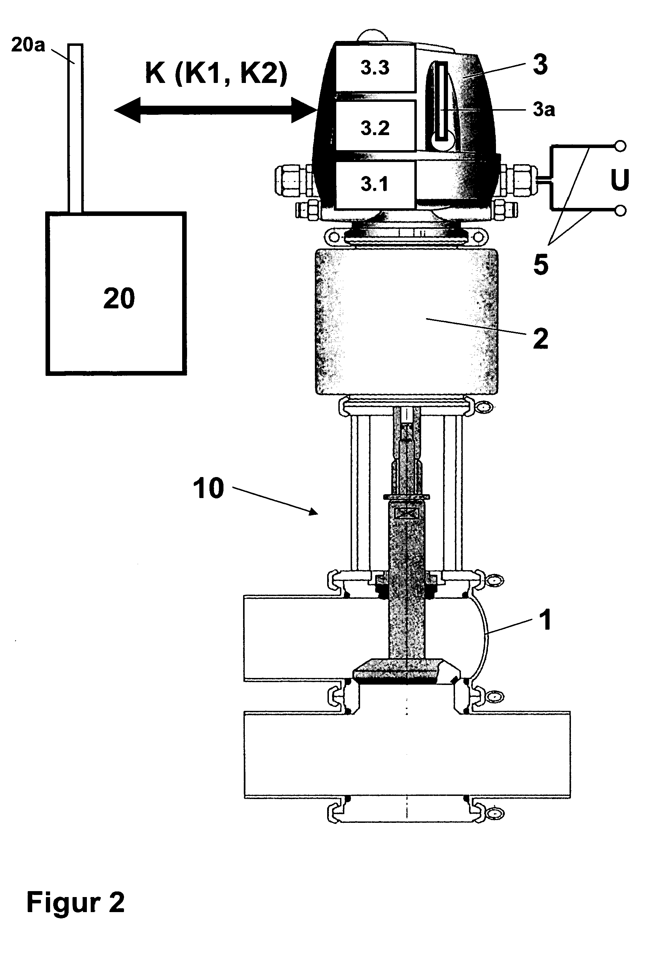

- **Figur2**: in schematischer Darstellung eine zweite Ausführungsform der Anordnung gemäß der Erfindung mit einem grundsätzlichen Auf- bau entsprechend Figur 1, wobei die lokale Steuerungs- und/oder Überwachungseinrichtung mit einer externen Energie- oder Span- nungsversorgung (Spannungsquelle) verbunden ist.

### DETAILLIERTE BESCHREIBUNG

Die am häufigsten vorkommende Systemkomponente in der Prozesstechnik, ein fernsteuerbares Prozessventil 10 (**Figuren 1** und **2**), besteht im Wesentlichen, bezogen auf die Darstellungslage, im unteren Teil aus einem Ventilgehäuse 1 mit wenigstens einem nicht bezeichneten Ventilsitz und einem zugeordneten, ebenfalls nicht bezeichneten Schließglied. Eine das Schließglied betätigende, nicht bezeichnete Ventilstange ist in einen als Aktor 3.2 fungierenden Antrieb 2 hineingeführt, der vorzugsweise als Kolbenantrieb mit einem druckmittelbeaufschlagten, gegen eine Feder arbeitenden Antriebskoben ausgeführt ist. Das dargestellte Prozessventil 10 ist als sog. Einsitzventil ausgestaltet. Sog. Doppelsitzventile mit zwei axial beabstandeten Ventilsitzen, die jeweils mit einem zugeordneten Schließglied zusammenarbeiten, die zwischen sich einen sog. Leckagehohlraum einschließen, der wenigstens über einen Verbindungsweg mit der Umgebung des Doppelsitzventils verbunden ist, kommen gleichfalls mit Blick auf die Erfindung zur Anwendung.

Oberhalb des Antriebs 2, d.h. im unmittelbaren Bereich der Systemkomponente 10, dem Prozessventil 10, befindet sich ein Anschluss- oder Steuerkopf 3. Sofern eine Rückmeldung der Stellungen des Prozessventils 10 vorgesehen ist, ist die Ventilstange durch den Antrieb 2 hindurch- und in den Anschlusskopf 3 hineingeführt, so dass über dort angeordnete, als Stellungsmelder arbeitende Sensoren 3.3 diskrete Stellungen der Ventilstange und damit des Schließgliedes des Prozessventils 10 erfasst werden. Der wenigstens eine Sensor 3.3 kann auch als Wegmesssystem ausgebildet sein, so dass beliebige Stellungen der Ventilstange und damit des Schließgliedes zwischen einer Schließ- und einer Offenstellung des Prozessventils detektiert werden.

In dem Anschlusskopf 3 befindet sich im Regelfall wenigstens ein ein Druckmittel steuerndes, elektromagnetisch betätigtes Pilotventil, das dem Aktor 3.2 zuzurechnen ist. Weiterhin ist im Anschlusskopf 3 eine lokale Steuerungs- und/oder Überwachungseinrichtung 3.1 vorgesehen, die im festverdrahteten Signalaustausch mit dem wenigstens einen Aktor 3.2 und/oder dem wenigstens einen Sensor 3.3 steht. Unter Festverdrahtung soll eine elektrische Verbindung in Form von diskreten Leitungen oder in Form einer Leiterplattenausführung verstanden werden.

Eine zentrale Steuerungs- und/oder Überwachungseinrichtung 20 steht über eine erste Antenne 20a in einer drahtlosen Kommunikation K mit der lokalen Steuerungs- und/oder Überwachungseinrichtung 3.1 im Anschlusskopf 3 des Prozessventils 10, wozu der Anschlusskopf 3 mit einer zweiten Antenne 3a ausgestattet ist. Die Kommunikation K umfasst hierbei einen Signalaustausch K1 zur Steuerung der Aktoren 3.2, im vorliegenden Falle die Ansteuerung des vorzugsweise elektromagnetisch betätigten Pilotventils 3.2 oder der Pilotventile 3.2 zur Steuerung des den Antrieb 2 beaufschlagenden Druckmittels, und weiterhin einen Signalaustausch K2 zur Überwachung der Sensoren 3.3, im vorliegenden Falle die Überwachung der Stellung(en) des Prozessventils 10 im vorstehend kurz umrissenen Sinne (sog. Rückmeldungen).

Gemäß einer ersten Ausführungsvariante (**Figur 1**) ist die wenigstens eine lokale Steuerungs- und/oder Überwachungseinrichtung 3.1 im Anschlusskopf 3, die auch bevorzugt die Spannungsversorgung der Pilotventile umfasst, vorzugsweise eine diesbezügliche Elektronik, an eine im unmittelbaren Bereich der Systemkomponente 10, des Prozessventils, integrierte, autarke Energie- oder Spannungsversorgung U* angeschlossen. Damit ist eine vollständig drahtlose Einbindung des Prozessventils 10 in die Prozessanlage realisiert, wofür allenfalls intern herangeführte Leitungsverbindungen 4 erforderlich sind.

Gemäß einer zweiten Ausführungsvariante (**Figur 2**) ist die wenigstens eine lokale Steuerungs- und/oder Überwachungseinrichtung 3.1 im Anschlusskopf 3, die auch bevorzugt die Spannungsversorgung der Pilotventile umfasst, vorzugsweise eine diesbezügliche Elektronik, an eine im Abstand von dem Prozessventil 10 angeordnete externe Energie- oder Spannungsversorgung U (Spannungsquelle) über entsprechend extern herangeführte Leitungen 5 verbunden.

Die integrierte, autarke Energie- oder Spannungsversorgung U* gemäß **Figur 1** substituiert die externe Energie- oder Spannungsversorgung U gemäß **Figur 2** vollumfänglich.

### BEZUGSZEICHENLISTE

- 10: Systemkomponente (z.B. Prozessventil)

- 1: Ventilgehäuse
- 2: Antrieb

- 3: Anschlusskopf (Steuerkopf)
- 3.1: lokale Steuerungs- und/oder Überwachungseinrichtung
- 3.2: Aktor(en)
- 3.3: Sensor(en)
- 3a: zweite Antenne (Anschlusskopf)

- 4: intern herangeführte Leitungsverbindungen (der integrierten, autarken Energie- oder Spannungsversorgung)
- 5: extern herangeführte Leitungen (der externen Energie- oder Spannungsversorgung)

- 20: zentrale Steuerungs- und/oder Überwachungseinrichtung
- 20a: erste Antenne

- K: drahtlose Kommunikation, umfassend den Signalaustausch K1, K2
- K1: Signalaustausch zur Steuerung (der Aktoren)
- K2: Signalaustausch zur Überwachung (der Sensoren)

- U: externe Energie- oder Spannungsversorgung
- U*: integrierte, autarke Energie- oder Spannungsversorgung

## Patentansprüche

1. Anordnung zur Kommunikation (K; K1, K2) mit Systemkomponenten (10) der Prozesstechnik, wobei die Kommunikation (K) mit einer von der wenigstens einen fernsteuerbaren Systemkomponente (10) im Abstand angeordneten zentralen Steuerungs- und/oder Überwachungseinrichtung (20) erfolgt, wobei die Kommunikation (K) wenigstens einen Signalaustausch zur Steuerung (K1) und/oder einen Signalaustausch zur Überwachung (K2) beinhaltet, mit wenigstens einer der Systemkomponente (10) zugeordneten und in deren unmittelbarem Bereich angeordneten kommunizierbaren lokalen Steuerungs-und/oder Überwachungseinrichtung (3.1), mit wenigstens einem der Systemkomponente (10) zugeordneten, in deren unmittelbarem Bereich angeordneten und diese betätigenden Aktor (3.2) und/oder einem der Systemkomponente (10) zugeordneten, in deren unmittelbarem Bereich angeordneten und diese überwachenden Sensor (3.3), wobei Aktor (3.2) und/oder Sensor (3.3) mit der lokalen Steuerungs- und/oder Überwachungseinrichtung (3.1) im festverdrahteten Signalaustausch stehen bzw. steht,
**dadurch gekennzeichnet,**
**dass** die Kommunikation (K; K1, K2) zwischen der zentralen Steuerungs-und/oder Überwachungseinrichtung (20) und der lokalen Steuerungs-und/oder Überwachungseinrichtung (3.1) draht- und lückenlos erfolgt.

2. Anordnung nach Anspruch 1,
**dadurch gekennzeichnet,**
**dass** die Kommunikation (K; K1, K2) auf der Basis des Standards WirelessHart oder ISA SP100 oder eines proprietären Systems erfolgt.

3. Anordnung nach Anspruch 1 oder 2,
**dadurch gekennzeichnet,**
**dass** der wenigstens eine Aktor (3.2) und/oder der wenigstens eine Sensor (3.3) über die wenigstens eine lokale Steuerungs- und/oder Überwachungseinrichtung (3.1) mit Energie- oder Spannung versorgt werden bzw. wird.

4. Anordnung nach Anspruch 3,
**dadurch gekennzeichnet,**
**dass** die wenigstens eine lokale Steuerungs- und/oder Überwachungseinrichtung (3.1) an eine im unmittelbaren Bereich der Systemkomponente (10) integrierte, autarke Energie- oder Spannungsversorgung (U*) angeschlossen ist.

5. Anordnung nach Anspruch 3,
**dadurch gekennzeichnet,**
**dass** die wenigstens eine lokale Steuerungs- und/oder Überwachungseinrichtung (3.1) an eine im Abstand von der Systemkomponente (10) angeordnete, externe Energie- oder Spannungsversorgung (U) angeschlossen ist.

6. Anordnung nach einem der vorhergehenden Ansprüche,
**dadurch gekennzeichnet,**
**dass** die Systemkomponente (10) ein fernsteuerbares Prozessventil ist.

7. Anordnung nach Anspruch 6,
**dadurch gekennzeichnet,**
**dass** das Prozessventil (10) einen als Aktor (3.2) fungierenden Antrieb (2) aufweist, der einen druckmittelbeaufschlagten, mit einer Federrückstellung versehenen Antriebskolben besitzt.

8. Anordnung nach Anspruch 7,
**dadurch gekennzeichnet,**
**dass** der Aktor (3.2) wenigstens ein elektromagnetisch betätigtes Pilotventil zur Steuerung eines Druckmittels aufweist.

9. Anordnung nach einem der Ansprüche 6 bis 8,
**dadurch gekennzeichnet,**
**dass** das Prozessventil (10) wenigstens einen Sensor (3.3) zur Detektierung einer diskreten, vorbestimmten Ventilstellung des Prozessventils (10) aufweist.

10. Anordnung nach einem der Ansprüche 6 bis 8,
**dadurch gekennzeichnet,**
**dass** das Prozessventil (10) wenigstens einen Sensor (3.3) in Form eines Wegmesssystems zur Detektierung beliebiger Ventilstellungen zwischen einer Schließ- und einer Offenstellung des Prozessventils (10) aufweist.

11. Anordnung nach einem der vorhergehenden Ansprüche,
**dadurch gekennzeichnet,**
**dass** die Systemkomponente (10) eine Pumpe, ein Gebläse, eine maschinelle Rühr- oder eine maschinelle Reinigungsvorrichtung ist.
